# EUROPEAN PATENT SPECIFICATION

(11) **EP 0 407 880 B1**
(45) Date of publication and mention of the grant of the patent: **12.05.1999**
(21) Application number: 90112755.5
(22) Date of filing: 04.07.1990
(51) Int. Cl.: B32B 27/08, B65D 65/40

(54) **Multilayer containers and method of making same**
Mehrschichtbehälter und Verfahren zum Herstellen derselben
Récipients multicouche et leur procédé de fabrication

(30) Priority: 10.07.1989 US 377392
(43) Date of publication of application: 16.01.1991
(73) Proprietor: OWENS-ILLINOIS PLASTIC PRODUCTS INC., Toledo, Ohio 43666 (US)
(72) Inventor: Jabarin, Saleh A., Holland, OH 43528 (US)
(74) Representative: Casalonga, Axel

(56) References cited:
- EP-A- 0 027 375
- EP-A- 0 035 392
- DE-A- 2 608 112
- US-A- 3 857 754

## Description

The present invention relates to multilayer containers containing at least two layers bonded together without an adhesive. The invention also relates to method of making the containers without using an adhesive layer between the two layers of the containers.

In the art, the usual method of making multilayer containers for food and chemical packaging involves bonding two layers of the containers together with a separate adhesive layer. Thus, an adhesive such as nylon or a copolymer of ethylene and vinyl acetate is applied to a plastic support layer of a polyolefin such as polyethylene or polypropylene or copolymers of ethylene and propylene.

The resulting structure has an extra layer with extra cost and, for production, requires using a multilayer die head design.

It is desirable to provide a multilayer container having two layers which are bonded together without a separate adhesive layer between the layers.

Document DE-2 608 112 discloses a process for making a laminated plastic article having improved oil resistance, good gas barrier properties and higher mechanical strengths by melt laminating a modified polyolefin mass and a polyester, a polyamide or a hydrolyzed copolymer of ethylene and vinylacetate. The modified polyolefin mass must contain at least 3 weight percent of a rubbery component to achieve good adhesion with the gas barrier material.

It is an object of the present invention to provide a multilayer plastic container having at least two plastic layers that are bonded together without using an extra separate adhesive layer between the layers.

It is an object of the present invention to provide a plastic container having two plastic layers (a support layer that is a polyolefin and a barrier layer such as nylon) without using a separate layer and without the use of a multilayer die head design.

These and other objects will be apparent from the specification that follows and the appended claims.

The present invention provides, in a first embodiment, a multilayer plastic container and a method of making the same, the container having a wall consisting of two plastic layers bonded together without a separate adhesive layer, a first layer being a polymer blend consisting solely of (A) a polyethylene or a polypropylene, (B) a polymer having a polar group, said polymer being a copolymer of ethylene or propylene and 2 to 20 weight percent of a polar group monomer, based on the total weight of the copolymer, that is vinyl acetate, vinyl alcohol or maleic anhydride, and (C) a polyamide and the second layer being a polyamide or a copolymer of ethylene and vinyl alcohol.

In a second embodiment, the present invention provides a container having a wall consisting of two plastic layers bonded together without a separate adhesive layer, a first layer being a polymer blend consisting solely of (A) a polyethylene or polypropylene, (B) a polymer having a polar group, said polymer being a copolymer of ethylene or propylene and 2 to 20 weight percent of a polar group monomer, based in the total weight of the copolymer, that is vinyl acetate or maleic anhydride, and (C) an ethylene/vinyl alcohol copolymer having a vinyl alcohol content of 5 to 25 weight percent and the second layer being a polyamide.

The first layer is a support layer and the second layer is a barrier layer.

The present invention provides for a method of making the previously described multilayer plastic containers.

In the present invention, the multilayer process is simplified by modifying polyolefin support layer polymers such as polyethylene or polypropylene by adding another polymer containing a polar group so that a direct bonding to the barrier layer, e.g., amorphous or crystalline polyamide, or ethylene-vinyl alcohol copolymer, is achieved without the use of a separate adhesive layer.

In the present invention, the polyolefin support layer is polyethylene or polypropylene. The polyethylene can be high density, low density, or linear low density polyethylene with high density polyethylene being preferred. Copolymers of ethylene and propylene are very useful, such copolymers containing about 80 or 85 up to 95 weight percent ethylene or propylene. Suitable polyethylenes, polypropylene and propylene based polymers are set forth in Jabarin U.S. patent No. 4,605,576.

Suitable barrier polymers include polyamides and copolymers of ethylene and vinyl alcohol (5 to 25 weight percent vinyl alcohol) are highly preferred.

Suitable polyamides are nylon, copolymers of adipic acid hexamethylene diamine (6, 6-nylon), and copolymers of adipic acid and polycaprolactam.

Suitable polar polymers are copolymers of ethylene or propylene with monomers containing polar groups, such as vinyl acetate, vinyl alcohol, or maleic anhydride. The polar group containing monomers represent generally 2 or 5 up to 20 or 25 weight percent of the total copolymer and preferably 5 or 10 up to 15 or 18 weight percent.

The bound maleic anhydride, or other polar group in the polymer can be 1/2 to 10 or 20 weight percent, the preferred functionality being 1 or 2 to 5 or 8 weight percent.

In a preferred embodiment, the polymer blend has 60 to 90 weight percent polyethylene or polypropylene, 5 to 20 weight percent of the polymer having a polar group and 5 to 20 weight percent of a polyamide.

The following examples illustrate the invention.

### EXAMPLE 1

High density polyethylene (HDPE), a polar group containing polymer (an 85/15 copolymer of ethylene and vinyl acetate), and a polyamide were mixed together in a single screw Brabender mixer in the ratio of 80:10:10. A sheet of such blend was pressed in a laboratory scale Carver Press at (450°F) 232°C. This sheet was then put in contact with a sheet of polyamide alone in the press at 232°C (450°F) and (25-30 psi) 0.172-0.206MPa for 2-4 minutes followed by quenching. In a control experiment, a sheet of HDPE and a sheet of polyamide were kept in the press under similar conditions. No adhesion was found between the sheet of HDPE and polyamide while the sheet of the above described blend could not be pulled apart from the sheet of polyamide.

### EXAMPLE 2

In another experiment, one gallon (3.78 l) containers were blown on a ML-4 blow molding machine with a gallon (3.78 l) mold at 232°C (450°F), with above described blend as the outside layer and polyamide as the inside layer. A good adhesion between these layers is observed.

Excellent results were obtained when polypropylene was used in place of polyethylene in the above examples. Also good results were obtained when a copolymer, of ethylene and vinyl alochol was used in place of the polyamide in the support layer and in the barrier layer.

## Claims

1. A container having a wall consisting of two layers bonded together without a separate adhesive layer, a first layer being a polymer blend consisting solely of (A) a polyethylene or polypropylene, (B) a polymer having a polar group, said polymer being a copolymer of ethylene or propylene and 2 to 20 weight percent of a polar group monomer, based on the total weight of the copolymer, that is vinyl acetate, vinyl alcohol or maleic anhydride, and (C) a polyamide and the second layer being a polyamide or an ethylene/vinyl alcohol copolymer.

2. A container having a wall consisting of two layers bonded together without a separate adhesive layer, a first layer being a polymer blend consisting solely of (A) a polyethylene or polypropylene, (B) a polymer having a polar group, said polymer having a polar group being a copolymer of ethylene or propylene and 2 to 20 weight percent of a polar group monomer, based on the total weight of the copolymer, that is vinyl acetate or maleic anhydride, and (C), an ethylene/vinyl alcohol copolymer having a vinyl alcohol content of 5 to 25 weight percent and the second layer being a polyamide.

3. A container as defined in claim 1 or 2 in which the polymer blend has 60 to 90 weight percent polyethylene or polypropylene, 5 to 20 weight percent of the polymer having a polar group, and 5 to 20 weight percent of the polyamide.

4. A container as defined in claim 1, wherein in the polymer blend (A) is a high density polyethylene, (B) is a polyethylene/vinyl acetate copolymer having a vinyl acetate content of 2 to 20 weight percent and (C) is nylon and the second layer being a nylon.

5. A container according to anyone of claims 1 to 4, wherein the first layer is a support layer and the second layer is a barrier layer.

6. A container according to claim 5, wherein said support layer consists of a polymer blend in which (A) is a polyethylene or polypropylene, (B) is a copolymer of ethylene or propylene and 2 to 20 weight percent of maleic anhydride, and (C) is a polyamide, and said barrier layer is a polyamide.

7. A container according to claim 4, wherein (B) is a polyethylene/vinyl acetate copolymer having 5 to 20 weight percent of vinyl acetate.

8. A container as defined in claim 5 or 6, in which (B) is a copolymer of ethylene and maleic anhydride.

9. A container as defined in claim 1 or 2, in which the amount of maleic anhydride in (B) is 5 to 10 weight percent.

10. A container as defined in anyone of claims 1 to 9 which is a blow molded container.

## Patentansprüche

1. Behälter mit folgenden Merkmalen:
der Behälter weist eine Wandung aus zwei Schichten auf, die ohne eine separate Klebstoffschicht miteinander verbunden sind;
die erste Schicht ist eine Polymermischung, die einzig besteht aus
(A) Polyethylen oder Polypropylen,
(B) einem Polymer mit einer polaren Gruppe, wobei der Polymer ein Copolymer aus Ethlyen oder Propylen und 2 bis 20 Gew.% eines Monomers mit polarer Gruppe ist, basierend auf dem Gesamtgewicht des Copolymers, d. h. Vinylacetat, Vinylalkohol oder Maleinsäureanhydrid, und
(C) Polyamid;
die zweite Schicht besteht aus Polyamid oder Ethylen/Vinylalkohol-Copolymer.

2. Behälter mit folgenden Merkmalen:
der Behälter weist eine Wandung aus zwei Schichten auf, die ohne eine separate Klebstoffschicht miteinander verbunden sind;
die erste Schicht ist eine Polymermischung, bestehend einzig aus
(A) Polyethylen oder Polypropylen,
(B) ein Polymer mit einer polaren Gruppe, wobei der Polymer mit der polaren Gruppe ein Copolymer von Ethylen oder Propylen und 2 bis 20 Gew.% eines Monomers mit polarer Gruppe darstellt, basierend auf dem Gesamtgewicht des Copolymers, d. h. Vinylacetat oder Maleinsäureanhydrid, und
(C) Ethylen/Vinylalkohol-Copolymer mit einem Vinylalkoholgehalt von 5 bis 25 Gew.%;
die zweite Schicht besteht aus Polyamid.

3. Behälter nach Anspruch 1 oder 2,
bei welchem die Polymermischung 60 bis 90 Gew.% Polyethylen oder Polypropylen, 5 bis 20 Gew.% des Polymers eine polare Gruppe und 5 bis 20 Gew.% Polyamid enthält.

4. Behälter nach Anspruch 1,
wobei in der Polymermischung der Bestandteil
(A) ein hochdichtes Polyethylen,
(B) ein Polyethylen/Vinylacetat-Copolymer mit einem Vinylacetatgehalt von 2 bis 20 Gew.% und
(C) Nylon darstellen,
und die zweite Schicht aus Nylon besteht.

5. Behälter nach einem der Ansprüche 1 bis 4,
worin die erste Schicht eine Trägerschicht und die zweite Schicht eine Barriereschicht darstellen.

6. Behälter nach Anspruch 5,
worin die Trägerschicht aus einer Polymermischung besteht, in welcher
(A) Polyethylen oder Polypropylen ist,
(B) ein Copolymer von Ethylen oder Propylen und 2 bis 50 Gew.% Maleinsäureanhydrid ist und
(C) ein Polyamid ist,
und worin die Barriereschicht aus Polyamid besteht.

7. Behälter nach Anspruch 4,
worin (B) ein Polyethylen/Vinylacetat-Copolymer mit 5 bis 20 Gew.% Vinylacetat ist.

8. Behälter nach Anspruch 5 oder 6,
bei welchem (B) ein Copolymer von Ethylen und Maleinsäureanhydrid ist.

9. Behälter nach Anspruch 1 oder 2,
bei welchem der Betrag an Maleinsäureanhydrid in (B) 5 bis 10 Gew.% beträgt.

10. Behälter nach einem der Ansprüche 1 bis 9,
der einen blasgeformten Behälter darstellt.

## Revendications

1. Récipient comprenant une paroi faite de deux couches réunies l'une à l'autre sans l'aide d'une couche séparée d'adhésif, une première couche étant un mélange de polymères qui contient uniquement (A) un polyéthylène ou un polypropylène, (B) un polymère présentant un groupe polaire, ledit polymère étant un copolymère d'éthylène ou de propylène et de 2 à 20 % en poids, par rapport au poids total du copolymère, d'un monomère à groupe polaire, à savoir de l'acétate de vinyle, de l'alcool de vinyle ou de l'anhydride maléique, et (C) un polyamide, et la seconde couche étant un polyamide ou un copolymère d'éthylène et d'alcool de vinyle.

2. Récipient comprenant une paroi faite de deux couches réunies l'une à l'autre sans l'aide d'une couche séparée d'adhésif, une première couche étant un mélange de polymères qui contient uniquement (A) un polyéthylène ou un polypropylène, (B) un polymère présentant un groupe polaire, ledit polymère qui présente un groupe polaire étant un copolymère d'éthylène ou de propylène et de 2 à 20 % en poids, par rapport au poids total du copolymère, d'un monomère à groupe polaire, à savoir de l'acétate de vinyle ou de l'anhydride maléique, et (C) un copolymère éthylène/alcool de vinyle dont la teneur en alcool de vinyle vaut de 5 à 25 % en poids, et la deuxième couche étant un polyamide.

3. Récipient selon la revendication 1 ou 2, dans lequel le mélange de polymères contient de 60 à 90% en poids de polyéthylène ou de polypropylène, de 5 à 20 % en poids du polymère présentant un groupe polaire et de 5 à 20% en poids de polyamide.

4. Récipient selon la revendication 1, dans lequel, dans le mélange de polymères, (A) est un polyéthylène haute densité, (B) est un copolymère éthylène/acétate de vinyle dont la teneur en acétate de vinyle vaut de 2 à 20 % en poids et (C) est du Nylon, la deuxième couche étant un Nylon.

5. Récipient selon l'une quelconque des revendications 1 à 4, dans lequel la première couche est une couche de support et la deuxième couche est une couche formant barrière.

6. Récipient selon la revendication 5, dans lequel ladite couche de support est faite d'un mélange de polymères dans lequel (A) est un polyéthylène ou un polypropylène, (B) est un copolymère d'éthylène ou de propylène et de 2 à 20% en poids d'anhydride maléique et (C) est un polyamide, ladite couche formant barrière étant un polyamide.

7. Récipient selon la revendication 4, dans lequel (B) est un copolymère éthylène/acétate de vinyle contenant de 5 à 20 % en poids d'acétate de vinyle.

8. Récipient selon la revendication 5 ou 6, dans lequel (B) est un copolymère d'éthylène et d'anhydride maléique.

9. Récipient selon la revendication 1 ou 2, dans lequel la quantité d'anhydride maléique dans (B) vaut de 5 à 10% en poids.

10. Récipient selon l'une quelconque des revendications 1 à 9, qui est un récipient soufflé en moule.
